# EUROPÄISCHE PATENTSCHRIFT

(11) **EP 0 702 633 B1**
(45) Veröffentlichungstag und Bekanntmachung des Hinweises auf die Patenterteilung: **03.09.1997**
(21) Anmeldenummer: 94920954.8
(22) Anmeldetag: 17.06.1994
(51) Int. Cl.: B60J 7/043

(54) **VORRICHTUNG ZUR STEUERUNG DER BEWEGUNG EINES FAHRZEUGSCHIEBEDACHDECKELS**
DEVICE FOR CONTROLLING THE MOVEMENT OF A VEHICLE SLIDING ROOF
DISPOSITIF DE COMMANDE DU TOIT OUVRANT D'UN VEHICULE

(30) Priorität: 17.06.1993 DE 4320106
(43) Veröffentlichungstag der Anmeldung: 27.03.1996
(73) Patentinhaber: HS Products AG Systemtechnik und Produktmanagement, 82152 Krailling (DE)
(72) Erfinder: HAUSRATH, Udo, D-82319 Hadorf (DE)
(74) Vertreter: Nöth, Heinz, Dipl.-Phys.
(86) Internationale Anmeldenummer: EP9401984
(87) Internationale Veröffentlichungsnummer: WO9500350

(56) Entgegenhaltungen:
- DE-A- 3 640 168
- FR-A- 2 525 160
- FR-A- 2 601 303
- GB-A- 2 161 439

## Beschreibung

Die Erfindung betrifft eine Vorritchung zur Steuerung der Bewegung eines Fahrzeugschiebedachdeckels mit den Merkmalen des Oberbegriffs des Anspruchs 1.

Aus der FR-A-2 601 303 ist eine solche Vorrichtung zur Steuerung der Bewegung eines Fahrzeugschiebedachdeckels bekannt geworden, die eine Längsführungsbahn aufweist, an der ein Gleitstück und ein mittels eines Antriebsmittels verfahrbarer Schlitten verschiebbar gelagert sind, wobei der Deckel um eine am Gleitstück gebildete Lagerachse verschwenkbar gelagert ist und das Gleitstück durch eine Verriegelungseinrichtung in seiner eine Längsverschiebung des Deckels sperrenden Stellung beim Ausstellen des Deckels durch den Schlitten mittels einer Kulissenanordnung gehalten ist.

Aufgabe der vorliegenden Erfindung ist es demgegenüber, eine gattungsgemäße Vorrichtung zu schaffen, die einen verbesserten und vereinfachten Verriegelungsmechanismus für das Gleitstück aufweist.

Diese Aufgabe wird durch eine Vorrichtung mit den Merkmalen des Anspruchs 1 gelöst, die eine selbsttätige Verriegelung für den Deckel bis zur Beendigung seiner Hubbewegung erreicht.

Da bei der gattungsgemäßen Vorrichtung gemaß der FR-A-2 601 303 eine Vorderkante des Deckels von der als Gelenkzapfen ausgebildeten Lagerachse, die den Drehpunkt des Deckels bei dessen Verschwenken in die Hubstellung bildet, beabstandet ist, bewegt sich die Vorderkante beim Verschwenken des Deckels auf einem Kreisbogen relativ zu dem vorderen Rand der Dachöffnung.

Daher ist, um ein verbessertes Bewegungsverhalten der Vorderkante des Fahrzeugschiebedachdeckels zu erhalten, die erfindungsgemäße Vorrichtung vorteilhafterweise mit den Merkmalen des Anspruchs 2 ausgebildet.

Durch die Merkmale des Anspruchs 2 wird eine definierte Drehachse bzw. ein definierter Drehpunkt an der Vorderkante des Deckels bei der Winkelbewegung wahrend des Ausstellens (Hubbewegung) bestimmt, und es wird vor dem Verschieben des Deckels beim Öffnen der Dachöffnung ein Anheben der Vorderkante des Deckels aus der Abdichtung erzielt und nach der Schließbewegung ein Absenken der Vorderkante in die Abdichtung.

Durch einen im Anspruch 6 gekennzeichneten Kipphebel erreicht man die Vereinigung der Funktionen des Mitwirkens bei der Bestimmung des Deckeldrehpunktes an der Deckelvorderkante, des Anhebens und Absenkens des Deckels und der Bildung der Sperre gegen die Mitbewegung des Deckels beim Ausstellen (Anspruch 10) in einem einzigen Bauteil.

Beim Anheben der Vorderkante des Deckels senkt sich die hintere Kante des Deckels etwas ab, so daß der Deckel bei seiner Längsverschiebung gegenüber der Dachfläche des Kraftfahrzeugs einen sehr flachen Anstiegswinkel hat bzw. praktisch parallel zur Dachoberfläche verläuft.

In den Figuren ist ein Ausführungsbeispiel der Erfindung dargestellt. Es zeigen:
- Figuren 1 bis 4:: verschiedene Betriebsstellungen der Steuerungsvorrichtung für die Deckelbewegung;
- Figur 5:: einen Querschnitt durch eine Führungsbahn für die Schlittenbewegung;
- Figur 6:: eine Gesamtdarstellung der Steuerungsvorrichtung, in welcher verschiedene Deckelstellungen und Stellungen, insbesondere die beiden Endstellungen, dargestellt sind; und
- Figur 7:: eine Explosionsdarstellung der wesentlichen Bestandteile des Ausführungsbeispiels.

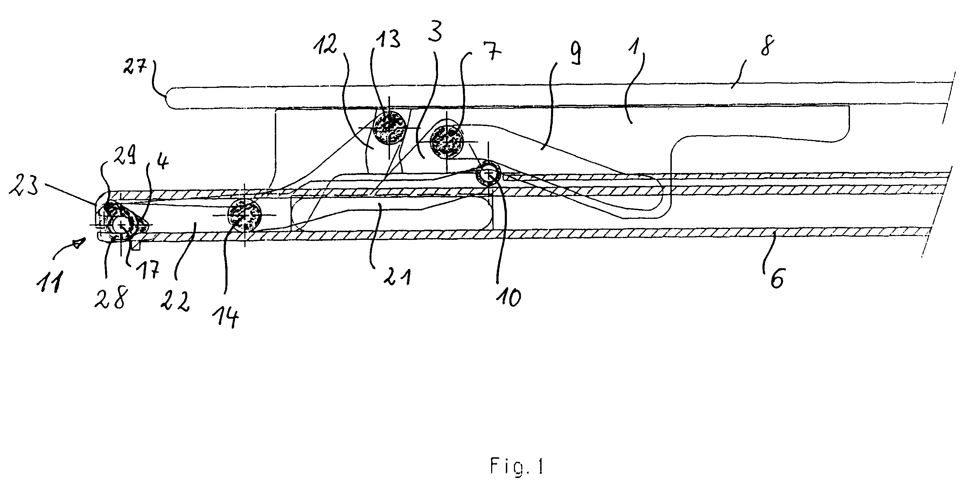

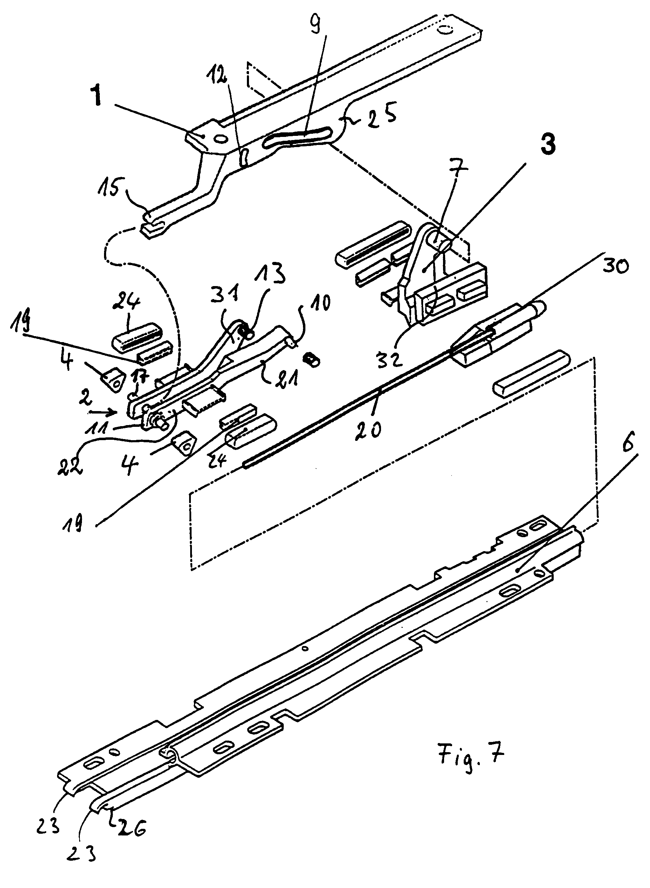

Wie insbesondere aus der Explosionsdarstellung des Ausführungsbeispiels in der Fig. 7 zu ersehen ist, besitzt die Vorrichtung zur Steuerung der Bewegung eines Fahrzeugschiebedachdeckels 8 (Fig. 1 - 4) einen Deckelhalter 1. Im Deckelhalter 1 ist eine Ausstellkulisse 9 vorgesehen, in welche ein Ausstellzapfen 7 an einem Schlitten (Transportschlitten) 3 ragt. Ferner ist am Deckelhalter eine Steuerkulisse 12 vorgesehen. In diese ragt ein Steuerzapfen 13 eines in einer Längsführungsbahn 6 (Führungsschiene) geführten Schwenkhebels 2. Die Steuerkulisse erstreckt sich etwa senkrecht zur Längsrichtung und hat eine schwache Krümmung bzw. eine leichte Knickstelle. Zur Führung des Schwenkhebels 2 in der Führungsbahn 6 sind Gleitbacken 19 beidseitig auf den Schwenkhebel 2 aufgesteckt und können aus einem Gummigrundkörper bestehen. Auf die elastischen Gleitbacken 19 sind Gleitkappen 24 aus Kunststoff aufgesetzt. Die elastischen Gleitbacken bilden einen Lagerpunkt 14 (Gleitlagerpunkt) für den Schwenkhebel 2, welcher innerhalb der Längsführungsbahn 6 verschiebbar ist (Figuren 1 bis 4).

Der Schwenkhebel 2 ist somit als zweiarmiger Hebel ausgebildet. Der erste Hebelarm 21 besitzt an seinem Ende ein Verriegelungsbetätigungselement in Form eines Verriegelungszapfens 10. Der zweite Hebelarm 22 besitzt an seinem vorderen Ende eine als Kippvorrichtung ausgebildete Hubeinrichtung in Form beidseitig angeordneter Kipphebel 4. Die Kipphebel sind einarmige Hebel und besitzen ein angeformtes Teil 28, welches abgerundet oder als Rolle ausgebildet sein kann. Die Kipphebel wirken mit Führungsmitteln 23 in Form von gegenüber der horizontalen abgewinkelten vorderen Führungsflächen an der Führungsschiene 6 zusammen.

Die Ausstellkulisse 9 und die Steuerkulisse 12 sind in einem senkrecht nach unten ragenden Führungsteil 25 (siehe Fig. 7) des eine waagerechte Befestigungsplatte aufweisenden Deckelhalters 1 vorgesehen. Die Ausstellkulisse 9 erstreckt sich mit ihrem wesentlichen Teil von vorne nach hinten schräg nach unten und bestimmt damit die Hubbewegung (Ausstellbewegung) des Deckels 8. Am vorderen Ende des Führungsteiles 25 ist eine Aufnahmegabei 15 vorgesehen, die das vordere Ende des Schwenkhebels 2 aufnimmt. Hierzu ist am vorderen Ende des Schwenkhebels 2 ein Lagerzapfen, welcher eine Aufnahmeachse 17 bildet, vorgesehen. An beidseitigen Verlängerungen des Lagerzapfens sind auch die Kipphebel 4 schwenkbar gelagert.

Mit Hilfe einer Handkurbel oder eines elektromotorischen Antriebs kann der Schlitten 3 für die in der Führungsschiene 6 erfolgende Bewegung angetrieben werden. Der Antrieb wird über ein Antriebskabel 20 übertragen. Am Antriebskabel 20 befindet sich ein Gleitstück 30, das in den Transportschlitten 3 zur Bewegungsübertragung eingesetzt ist.

Am Schwenkhebel 2 ist ein weiteres Bewegungssteuerelement in Form des Steuerzapfens 13 vorgesehen. Dieser befindet sich an einem weiteren Hebelarm 31 an der Seite des ersten Hebelarmes 21. Der Steuerzapfen 13 ist in der Weise mit dem Schwenkhebel 2 verbunden, daß er in die Steuerkulisse 12 am Führungsteil 25 des Deckelhalters 1 eingreift. Sowohl am Verriegelungszapfen 10 als auch am Steuerzapfen 13 können reibungsvermindernde Rollen vorgesehen sein.

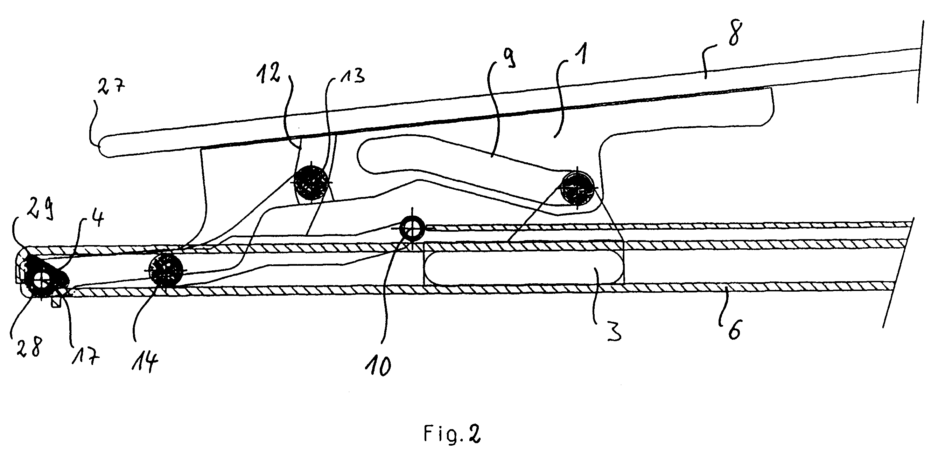

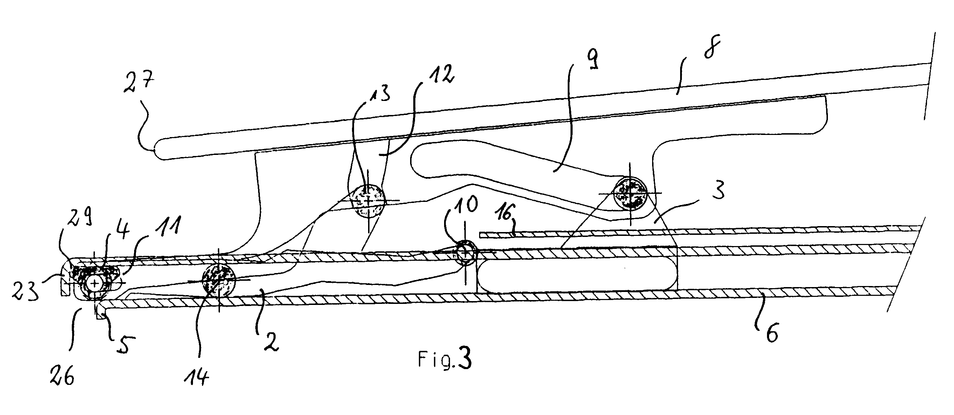

Beim Verschieben des Transportschlittens 3 in der Führungsschiene 6 ergibt sich ein kombinatorisches Zusammenwirken durch den Eingriff des Ausstellzapfens 7 in die Ausstellkulisse 9, durch den Eingriff des Steuerzapfens 13 in die Steuerkulisse 12, durch die Aufnahme des vorderen Hebelarmendes 11 in der Aufnahmegabel 15 am Führungsteil 25 und durch den Verriegelungszapfen 10 in der Weise, daß in einer ersten zurückgezogenen Position bei ausgestelltem Deckel 8 (Fig. 2) die Mechanikteile zueinander verriegelt sind und bei einer weiteren Verschiebung des Schlittens (Fig. 3) durch den Schwenkhebel 2 die Deckelvorderkante 27 angehoben wird. Der Drehpunkt der Ausstellbewegung (Bewegung von Figur 1 nach Figur 2) wird dabei auf die Deckelvorderkante 27 verlegt.

Anhand der Figuren 1 bis 4 werden verschiedene Betriebsstellungen des Transportschlittens 3 und des damit gekoppelten Schwenkhebels 2 und der daran angeordneten Funktionselemente noch näher erläutert.

Durch die Betätigung der Handkurbel bzw. Elektroantriebs wird der Transportschlitten 3, der in der Führungsschiene 6 gleitet, über das Antriebskabel 20 bewegt. Der Transportschlitten 3 greift über den Ausstellzapfen 7 in die Ausstellkulisse 9 des Deckelhalters ein. Über diese Ausstellkulisse 9 wird durch die Längsbewegung des Transportschlittens 3 der Deckelhalter 1 und der Deckel 8 hinten angehoben (Fig. 2).

Der Drehpunkt dieser Hubbewegung des Deckels 8 liegt an der Deckelvorderkante 27 und wird mit Hilfe der Steuerkulisse 12 und der Aufnahmegabel 15 im Deckelhalter erzeugt. Der Steuerzapfen 13 bewegt sich dabei in der Steuerkulisse 12 aus einer oberen Position (Fig.1) in eine mittlere Position (Fig. 2), in welcher die Steuerkulisse eine leichte Biegung aufweist. Während der Hubbewegung wird der Verriegelungszapfen 10 über eine Führungsbahn 32 auf dem Transportschlitten 3 in der Verriegelungsposition gehalten. In dieser Position drückt der Verriegelungszapfen 10 um den Drehpunkt 14 des Gleitbackenlagers des Schwenkhebels 2 den Kipphebel 4 mit seinem Kipphebelteil 28 in eine Aussparung 26 am vorderen Ende der Führungsschiene 6. Dadurch wird verhindert, daß während der Hubbewegung der Deckel 8 vom Transportschlitten 3 in Längsrichtung mitgezogen wird. Dies wird dadurch erreicht, daß der Schwenkhebel 2 und der damit verbundene Deckelhalter an ihrem vorderen Ende durch den Kipphebel 4 festgehalten werden. Hierdurch erreicht man die Sperre gegen die Längsbewegung des Deckels 8 beim Ausstellen.

Nach Beendigung dieser Ausstellbewegung fährt der Ausstellzapfen 7 in der Ausstellkulisse 9 gegen den hinteren Anschlag (Fig. 2), und der Steuerzapfen 13 befindet sich an der Knickstelle in der Steuerkulisse 12. Der Deckel 8 kann diese ausgestellte Position beibehalten.

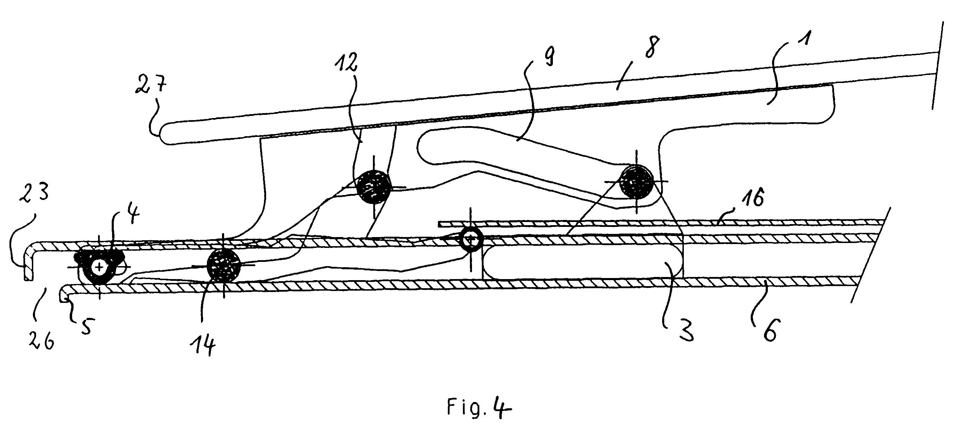

Bei einer weiteren Längsbewegung zieht der Transportschlitten 3 über den Deckelhalter 1 und den in der Steuerkulisse 12 in die unterste Position gebrachten Steuerzapfen 13 den Schwenkhebel 2 in Längsrichtung mit. Der Schwenkhebel 2 kippt zu Beginn der Deckellängsbewegung zusätzlich um den Lagerpunkt 14 mit dem Verriegelungszapfen 10 nach unten und mit dem in der Aufnahmeachse 17 liegenden Kipphebellagerpunkt am Hebelende 11 nach oben. Der Verriegelungszapfen 10 taucht hinter dem Ende der Führungsbahn 32 des Transportschlittens 3 nach unten ein und wird unter einen Führungssteg 16 (Fig. 3, 4) in der Führungsschiene 6 hineingezogen. In dieser Position ist der Transportschlitten 3 mit dem Schwenkhebel 2 über den Deckelhalter 1 verspannt.

Diese erste Längs- und Kippbewegung des Schwenkhebels 2 wird durch den Kipphebel 4 und den z.B. als Kipphebelrolle ausgebildeten oder einstückig angeformten Kipphebelteil 28 erzeugt, die in der Aufnahmeachse 17 des Schwenkhebels drehgelagert sind. Der Kipphebel 4 wirkt dabei mit schräg oder rechtwinkelig abgebogenen Führungsmitteln am vorderen Ende der Führungsschiene 6 zusammen. Die Führungsmittel werden beim dargestellten Ausführungsbeispiel durch ein rechtwinklig abgewinkeltes Teil 23 des oberen waagerecht verlaufenden Schienenteils der Führungsschiene 6 und ein unteres rechtwinklig abgebogenes Schienenteil 5 gebildet. Zwischen den beiden Schienenteilen am Anfang der Führungsschiene 6 wird die Ausnehmung 26 gebildet. In der Ecke zwischen dem oberen waagerecht verlaufenden Schienenteil der Führungsschiene 6 und dem abgewinkelten Schienenteil 23 wird ein Lagerpunkt für den Kipphebel 4 gebildet, welcher einen Drehpunkt 29 für die Schwenkbewegung bzw. Kippbewegung des Kipphebels 4 bei der Bewegung aus der Stellung in den Figuren 1 und 2 in die Stellung der Figur 3 bildet. Bei dieser Bewegung wird der in den Figuren 1 und 2 in der Ausnehmung 26 liegende Kipphebelteil 28 aus der Ausnehmung 26 gehoben. Der Drehpunkt 29 liegt oberhalb des Drehpunktes bzw. Lagerpunktes 14 für den zweiarmigen Schwenkhebel 2. Die rechtwinklig abgebogenen vorderen Führungsschienenenden 5 und 23 können beide oder jeweils einzeln auch einen schrägen Verlauf zur Begrenzung der Ausnehmung 26 haben. Bei der Bewegung des Kipphebels 4 aus der in den Figuren 1 und 2 dargestellten Stellung in die in der Figur 3 dargestellte Stellung wird das vordere Hebelarmende 11 des zweiarmigen Schwenkhebels 2 angehoben. Hierdurch wird auch die Vorderkante 27 des Deckels 8 angehoben bei gleichzeitiger Absenkung des rückwärtigen Teils des Deckels 8.

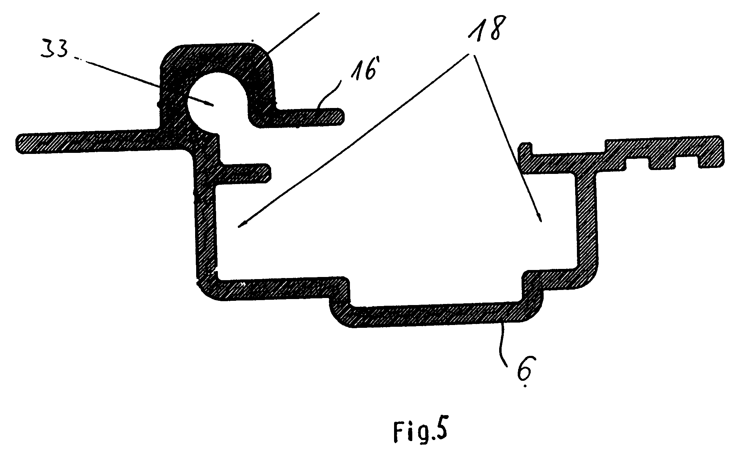

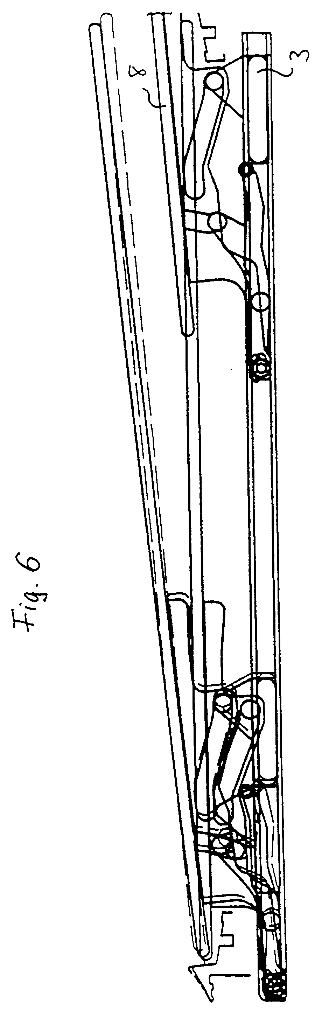

Bei der weiteren Längsverschiebung des Schlittens 3 in die in Richtung zu der in Fig. 6 dargestellten Endposition bewegen sich der Transportschlitten 3, die Gleitkappen 24, welche zusammen mit den Gleitbacken 19 den Lagerpunkt 14 des Schwenkhebels 2 bilden, und der Kipphebel 4 in Führungsbahnen 18 (Fig. 5) der Führungsschiene 6. Das Antriebskabel 20 verläuft in einem Führungskanal 33. Der Verriegelungszapfen 10 gleitet entlang dem Führungssteg 16.

Der Kipphebel 4 steht in der Schiene 6 oben auf Anschlag und legt sich an die waagerechte Fläche der Schiene 6 an. Dadurch gleitet der Kipphebel 4 mit dem Kipphebelteil 28 widerstandsfrei in die Führungsschiene 6 bis in die in Fig. 6 gezeigte hintere Endposition, in welcher der Deckel 8 aus der Dachöffnung entfernt ist.

## Patentansprüche

1. Vorrichtung zur Steuerung der Bewegung eines Fahrzeugschiebedachdeckels (8)
mit einer Längsführungsbahn (6), an der ein Gleitstück (2) und ein mittels eines Antriebsmittels (20) verfahrbarer Schlitten (3) verschiebbar gelagert sind,
wobei der Deckel (8) um eine am Gleitstück (2) gebildete Lagerachse (17) verschwenkbar gelagert ist und das Gleitstück (2) durch eine Verriegelungseinrichtung (4, 26) in seiner eine Längsverschiebung des Deckels (8) sperrenden Stellung beim Ausstellen des Deckels (8) durch den Schlitten (3) mittels einer Kulissenanordnung (7, 9) gehalten ist,
**dadurch gekennzeichnet, daß**
das Gleitstück (2) ein zweiarmiger Schwenkhebel (2) ist, der um einen an der Langsführungsbahn (6) verschiebbaren Lagerpunkt (14) verschwenkbar ist und der am ersten Hebelarm (21) ein Verriegelungsbetätigungselement (10) aufweist, mit dem der Schwenkhebel (2) vom Schlitten (3) beim Ausstellen des Deckels (8) in der sperrenden Stellung gehalten wird, in welcher das vordere Ende (11) des zweiten Hebelarms (22) des Schwenkhebels (2) in eine Verriegelung (26) in der Längsführungsbahn (6) gekippt ist.

2. Vorrichtung nach Anspruch 1, dadurch gekennzeichnet, daß ein Steuerzapfen (13) am Schwenkhebel (2) angeordnet ist, der in eine in einem Deckelhalter (1) des Deckels (8) ausgebildete Steuerkulisse (12) eingreift und den Deckel (8) beim Ausstellen um eine an der Deckelvorderkante (27) festgelegte Schwenkachse führt, und
wobei der Deckelvorderkante (27) im Übergang zwischen Schwenk- und Längsverschiebebewegung des Deckels (8) durch Anheben des Deckelhalters (1) mittels der am Vorderende (11) des Schwenkhebels (2) gebildeten Lagerachse (17) eine zusätzliche Hubbewegung aufgeprägt wird.

3. Vorrichtung nach Anspruch 1 oder 2, dadurch gekennzeichnet, daß der Schlitten (3) einen Ausstellzapfen (7) aufweist, der in eine mit dem Deckel (8) bzw. dem Deckelhalter (1) verbundene Ausstellkulisse (9) eingreift.

4. Vorrichtung nach einem der Ansprüche 1 bis 3, dadurch gekennzeichnet, daß an der Führungsbahn (6) Führungsmittel (23, 5) vorgesehen sind, durch die der zweite Hebelarm (22) des Schwenkhebels (2) zu Beginn der Längsbewegung des ausgestellten Deckels (8) um einen Lagerpunkt (14) angehoben wird und am Ende der Schließbewegung abgesenkt wird.

5. Vorrichtung nach Anspruch 4, dadurch gekennzeichnet, daß am Hebelarmende (11) des zweiten Hebelarmes (22) eine mit den Führungsmitteln (23, 5) zusammenwirkende Hubeinrichtung (4, 28) zur Steuerung des Anhebens und Absenkens der Vorderkante (27) des Deckels (8) vorgesehen ist.

6. Vorrichtung nach Anspruch 5, dadurch gekennzeichnet, daß die Hubeinrichtung einen verschwenkbaren Kipphebel (4) aufweist.

7. Vorrichtung nach einem der Ansprüche 2 bis 6, dadurch gekennzeichnet, daß der Deckelhalter (1) mit dem Hebelarmende (11) des zweiten Hebelarms (22) verbunden ist.

8. Vorrichtung nach einem der Ansprüche 2 bis 7, dadurch gekennzeichnet, daß der Deckelhalter (1) an seinem Vorderende eine Aufnahmegabel (15) zur Schwenklagerung an der Lagerachse (17) am vorderen Hebelarmende (11) des Schwenkhebels (2) aufweist.

9. Vorrichtung nach einem der Ansprüche 1 bis 8, dadurch gekennzeichnet, daß bei der Schließbewegung der Schlitten (3) über das Verriegelungsbetätigungselement (10) mit dem Schwenkhebel (2) und dem Deckelhalter (1) verspannt ist.

10. Vorrichtung nach einem der Ansprüche 4 bis 9, dadurch gekennzeichnet, daß die Führungsmittel (23, 5) eine Ausnehmung (26) aufweisen, in welcher der Kipphebel (4) bei geschlossenem Deckel (8) und bis zum Ende der Ausstellbewegung des Deckels (8) mit einem angeformten Teil (28) zur Bildung der Sperre gegen eine Mitbewegung des Deckels (8) gehalten ist.

11. Vorrichtung nach einem der Ansprüche 4 bis 10, dadurch gekennzeichnet, daß die Führungsmittel (23, 5) ferner einen Drehpunkt (29) für den als einarmiger Hebel ausgebildeten Kipphebel (4) bilden.

12. Vorrichtung nach Anspruch 11, dadurch gekennzeichnet, daß der Drehpunkt (29) oberhalb des Lagerpunktes (14) des Schwenkhebels (2) liegt.

## Claims

1. An arrangement for controlling the movement of a vehicle sliding roof (8), comprising
a longitudinal guide track (6) on which a slide portion (2) and a slider (3) displaceable by means of a drive means (20) are slidably mounted,
wherein the roof (8) is mounted pivotably about a mounting axis (17) formed on the slide portion (2) and the slide portion (2) is held by a locking device (4, 26) in its position of blocking longitudinal sliding movement of the roof (8) upon outward displacement of the roof (8) by the slider (3) by means of a sliding guide arrangement (7, 9),
characterised in that
the slide portion (2) is a two-armed pivot lever (2) which is pivotable about a mounting point (14) slidable on the longitudinal guide track (6) and which on the first lever arm (21) has a locking actuating element (10) with which the pivot lever (2) is held by the slider (3) upon outward displacement of the roof (8) in the locking position in which the front end (11) of the second lever arm (22) of the pivot lever (2) is tilted into a locking means (26) in the longitudinal guide track (6).

2. An arrangement according to claim 1 characterised in that a control projection (13) is arranged on the pivot lever (2), which engages into a control slide (12) provided in a roof holder (1) of the roof (8) and which guides the roof (8) upon outward displacement thereof about a pivot axis fixed at the front edge (27) of the roof, and wherein an additional lift movement is imparted to the front edge (27) of the roof in the transition between pivotal and longitudinal sliding movement of the roof (8) by lifting of the roof holder (1) by means of the mounting axis (17) formed at the front end (11) of the pivot lever (2).

3. An arrangement according to claim 1 or claim 2 characterised in that the slider has an outward displacement projection (7) which engages into an outward displacement slide (9) connected to the roof (8) or the roof holder (1).

4. An arrangement according to one of claims 1 to 3 characterised in that provided on the guide track (6) are guide means (23, 5) by which the second lever arm (22) of the pivot lever (2) is lifted about a mounting point (14) at the beginning of the longitudinal movement of the outwardly displaced roof (8) and lowered at the end of the closing movement.

5. An arrangement according to claim 4 characterised in that provided at the lever arm end (11) of the second lever arm (22) is a lift device (4, 28) co-operating with the guide means (23, 5) for controlling the lifting and lowering movement of the front edge (27) of the roof (8).

6. An arrangement according to claim 5 characterised in that the lift device has a pivotable rocking lever (4).

7. An arrangement according to one of claims 2 to 6 characterised in that the roof holder (1) is connected to the lever arm end (11) of the second lever arm (22).

8. An arrangement according to one of claims 2 to 7 characterised in that at its front end the roof holder (1) has a mounting fork (15) for pivotable mounting on the mounting axis (17) at the front lever arm end (11) of the pivot lever (2).

9. An arrangement according to one of claims 1 to 8 characterised in that in the closing movement the slider (3) is braced by way of the locking actuating element (10) to the pivot lever (2) and the roof holder (1).

10. An arrangement according to one of claims 4 to 9 characterised in that the guide means (23, 5) have an opening (26) in which when the roof (8) is closed and up to the end of the outward displacement movement of the roof (8) the rocking lever (4) is held with a portion (28) formed thereon to form the blocking means to prevent a joint movement of the roof (8).

11. An arrangement according to one of claims 4 to 10 characterised in that the guide means (23, 5) also form a pivot point (29) for the rocking lever (4) which is in the form of a single-arm lever.

12. An arrangement according to claim 11 characterised in that the pivot point (29) is above the mounting point (14) of the pivot lever (2).

## Revendications

1. Dispositif pour la commande de déplacement d'un toit ouvrant (8) de véhicule, comportant une glissière longitudinale (6), sur laquelle sont montés avec une possibilité de déplacement une pièce coulissante (2) et un chariot (3), mobile au moyen d'un élément d'entraînement (20), le toit (8) étant monté avec une possibilité de pivotement autour d'un axe de palier (17) formé sur la pièce coulissante (2), et la pièce coulissante (2) étant maintenue par un dispositif de verrouillage (4, 26) dans sa position de blocage d'un déplacement longitudinal du toit (8), lors de la levée du toit (8) par le chariot (3) au moyen d'un agencement de coulisses (7, 9), caractérisé en ce que la pièce coulissante (2) est un levier pivotant à deux bras (2), qui peut pivoter autour d'un point de palier (14) mobile dans la glissière longitudinale (6) et qui présente, sur le premier bras de levier (21), un élément de commande de verrouillage (10), à l'aide duquel le levier pivotant (2) est maintenu par le chariot (3), lors de la levée du toit (8), dans la position de blocage dans laquelle l'extrémité avant (11) du second bras (22) du levier pivotant (2) a basculé dans un verrouillage (26) de la glissière longitudinale (6).

2. Dispositif suivant la revendication 1, caractérisé en ce qu'un axe de commande (13), disposé sur le levier pivotant (2), s'engage dans une coulisse de commande (12) réalisée dans un support (1) du toit (8), et guide le toit (8), lors de sa levée, autour d'un axe de pivotement défini sur le bord avant (27) du toit, une course supplémentaire étant conférée au bord avant (27), dans le passage entre le mouvement de pivotement et de déplacement longitudinal, par la levée du support de toit (1) au moyen de l'axe de palier (17) formé sur l'extrémité avant (11) du levier pivotant (2).

3. Dispositif suivant l'une des revendications 1 et 2, caractérisé en ce que le chariot (3) présente un axe de levée (7), qui s'engage dans une coulisse de levée (9) assemblée avec le toit (8) et/ou avec le support de toit (1).

4. Dispositif suivant l'une des revendications 1 à 3, caractérisé en ce que la glissière (6) présente des moyens de guidage (23, 5), par lesquels le second bras (22) du levier pivotant (2) est relevé autour d'un point de palier (14), au début du déplacement longitudinal du toit (8) levé, et est abaissé à la fin du mouvement de fermeture.

5. Dispositif suivant la revendication 4, caractérisé en ce qu'un système de levée (4, 28), concourant avec les moyens de guidage (23, 5), est prévu sur l'extrémité (11) du second bras de levier (22), pour commander la montée et la descente du bord avant (27) du toit (8).

6. Dispositif suivant la revendication 5, caractérisé en ce que le système de levée présente un culbuteur (4) pivotant.

7. Dispositif suivant l'une des revendications 2 à 6, caractérisé en ce que le support de toit (1) est assemblé avec l'extrémité (11) du second bras de levier.

8. Dispositif suivant l'une des revendications 2 à 7, caractérisé en ce que le support de toit (1) présente sur son extrémité avant une fourche de réception (15) pour le montage pivotant sur l'axe de palier (17), prévu sur l'extrémité de bras avant (11) du levier pivotant (2).

9. Dispositif suivant l'une des revendications 1 à 8, caractérisé en ce que, lors du mouvement de fermeture, le chariot (3) est bridé avec le levier pivotant (2) et le support de bras (1) par l'intermédiaire de l'élément de commande de verrouillage (10).

10. Dispositif suivant l'une des revendications 4 à 9, caractérisé en ce que les moyens de guidage (23, 5) présentent un évidement (26), dans lequel le culbuteur (4) est maintenu par un élément conformé (28), en position de fermeture du toit (8) et jusqu'à la fin du mouvement de levée du toit (8), pour former le blocage contre un entraînement du toit (8).

11. Dispositif suivant l'une des revendications 4 à 10, caractérisé en ce que les moyens de guidage (23, 5) forment par ailleurs un point de rotation (29) pour le culbuteur (4), réalisé sous forme de levier à un bras.

12. Dispositif suivant la revendication 11, caractérisé en ce que le point de rotation (29) se si tue au-dessus du point de palier (14) du levier pivotant (2).
